# EUROPÄISCHE PATENTSCHRIFT

(11) **EP 1 208 947 B1**
(45) Veröffentlichungstag und Bekanntmachung des Hinweises auf die Patenterteilung: **10.09.2008**
(21) Anmeldenummer: 02002313.1
(22) Anmeldetag: 29.10.1997
(51) Int. Cl.: B25B 23/14, B23P 19/06

(54) **Kraftschrauber**
Power wrench
Clé motorisée

(30) Priorität: 19.11.1996 DE 19647813
(43) Veröffentlichungstag der Anmeldung: 29.05.2002
(62) Teilanmeldung aus: 97945877.5
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner

(56) Entgegenhaltungen:
- DE-A- 2 918 845
- DE-A- 3 318 910
- DE-A- 3 327 964
- DE-A- 4 128 427
- DE-A- 4 307 131
- US-A- 5 215 270
- US-A- 5 476 014
- PATENT ABSTRACTS OF JAPAN vol. 18, no. 502 (M-1676), 20. September 1994 (1994-09-20) & JP 06 170662 A (NITTO SEIKO CO LTD), 21. Juni 1994 (1994-06-21)

## Beschreibung

Die Erfindung betrifft einen Kraftschrauber mit einer Antriebseinheit, eine Abtasteinrichtung für das Ist-Drehmoment sowie ggf. für den Ist-Schraubenspannwinkel und einer elektronischen Steuerung der Drehzahl und/oder des Drehmoments und ggf. des Schraubenspannwinkels.

In der deutschen Patentschrift 43 07 131 ist ein Kraftschrauber mit einem einer Antriebseinheit nachgeschalteten Planetengetriebe, einer Drehmomenterfassung an einer Abtriebswelle, mit einer Auswerteelektronik und einer Abschalteinrichtung für die Antriebseinheit, einer Abtasteinrichtung zum Erfassen der Drehstellung der Antriebseinheit beschrieben, wobei die Abschalteinrichtung eine einstellbare Vorgabeeinrichtung für ein bestimmtes, mit der Drehmomenterfassung ermitteltes Drehmoment und zusätzlich eine einstellbare Vorgabeeinrichtung für einen bestimmten, mit der Drehstellungserfassung ermittelten Nachlaufweg umfaßt und ein Abschalten der Antriebseinheit nach dem Erreichen des eingestellten Drehmoments und einem anschließenden Weiterdrehen um einen eingestellten Nachlaufweg erfolgt.

Vor einem Schraubvorgang werden das erforderliche Drehmoment sowie ein ggf. erforderlicher Nachlaufweg an den entsprechenden Einstellelementen eingestellt. Dann wird der Kraftschrauber auf die Verschraubung aufgesteckt und ein Stützfuß gegen eine feste Abstützung bewegt. Nach dem Start der Antriebseinheit wird der Schraubvorgang ausgeführt und die Verschraubung angezogen, wodurch das Drehmoment ansteigt. Der meßtechnisch erfaßte Drehmomentwert wird mit dem durch die Einstellung vorgegebenen Drehmomentwert verglichen und bei Übereinstimmung beider Werte erfolgt ein internes Umschaltsignal für die Nachlaufsteuerung. Ausgehend von der gerade aktuellen Drehstellung wird nun die Antriebseinheit um den eingestellten Nachlaufweg weitergedreht. Nach dem Durchlaufen des eingestellten Nachlaufwegs wird über eine Abschalteinrichtung ein Schaltsignal zum Ausschalten der Antriebseinheit und damit zur Beendigung des Schraubvorgangs abgegeben.

Bei dem bekannten Kraftschrauber muss die Bedienungsperson anhand von Tabellen mit Bezug auf die Schraubengröße und die Materialgüte das erforderliche Soll-Drehmoment ermitteln und in die Eingabeelektronik eingeben. Auch der Nachlaufweg muss zunächst von der Bedienungsperson ermittelt werden, um dann ebenfalls in die Eingabeelektronik eingegeben zu werden. Welche Funktion der Nachlaufweg hat und wie dieser ermittelt wird, ist in der deutschen Patentschrift 43 07 131 nicht angegeben. Auch ist der messtechnisch erfassbare Drehmomentwert stark von äußeren Umständen wie Gewindereibung und dergleichen abhängig und kein genaues Maß für die tatsächlich erreichte Schraubenvörspannung.

In der DE 29 18 845 A1 sind ein Verfahren und ein Schrauber zum Anschrauben eines Halbleiter-Bauteils an ein Kühlblech mit einem Schrauber mit Drehmomentbegrenzung beschrieben. Zwischen dem Gehäuse des Bauteils und dem Kühlblech sind eine elektrische Isolierfolie und eine oder mehrere Schichten aus Wärmeleitpaste vorgesehen. Beim Festziehen des Schraube steigt das Drehmoment des Schraubers bei gleichzeitig sinkender Drehzahl zunächst an, um bei Erreichen eines voreingestellten Nennwertes einige Sekunden bei diesem Nennwert zu verbleiben, wonach der Schrauber abgeschaltet wird. Hierdurch wird ein Setzen der Schraubverbindung durch Fließen der Wärmeleitpaste erreicht, ohne dass sich die Schraubverbindung später wieder lockern kann.

In der US 5,215,270 A sind ein Verfahren und eine Vorrichtung beschrieben, mit denen sich ein Gabelkopf eines Kreuzgelenks auf ein Gewinde einer Kegelritzelwelle eines Differentialgetriebes und eine Kontermutter aufschrauben lassen. Der Gabelkopf wird auf die Kegelritzelwelle aufgeschraubt und auf ein vorbestimmtes Drehmoment angezogen, das einer vorgegebenen Vorspannung der Kegelrollenlager der Kegelritzelwelle entspricht, während die Kontermutter gegen den Gabelkopf mit einem vorgegebenen Anzugmoment gespannt wird. Sowohl das Drehmoment beim Anziehen des Gabelkopfs als auch das Drehmoment beim Anziehen der Kontermutter werden kontinuierlich einer Auswerteeinheit zugeführt, und die Drehzahl der Antriebsmotoren für den Gabelkopf und für die Kontermutter werden kontinuierlich mit dem Ansteigen des Drehmoments vermindert bis die vorgegebenen Soll-Anzugsmomente erreicht sind. In diesem Moment werden beide Antriebe abgeschaltet und der Anzugsvorgang ist beendet.

Der Erfindung liegt das Problem zugrunde, die Bedienung eines Kraftschraubers der eingangs erwähnten Art zu vereinfachen und Bedienungsfehler möglichst auszuschalten, ohne dass besondere Anforderungen an die Fachkenntnisse der Bedienungsperson gestellt werden. Des weiteren sollen Schäden an den anzuziehenden Schrauben und am Kraftschrauber vermieden, die Genauigkeit, mit der das Anziehen der Schrauben bewirkt wird, erhöht, die Auswirkung der Rotationsenergie der Antriebseinheit beim Abschalten auf das Anziehen der Schraube vermindert oder beseitigt und eine sichere Übertragung der Mess- und Steuersignale gewährleistet werden.

Ausgehend von dieser Problemstellung wird ein Kraftschrauber vorgeschlagen, bei dem der Einfluss der Rotationsenergie der sich drehenden Teile auf die Schraubenvorspannkraft verringert oder ausgeschaltet wird und der eine Antriebseinheit, eine Eingabeelektrik zum Eingeben eines der geforderten Soll-Vorspannkraft entsprechenden Soll-Drehmoments, eine Abtasteinrichtung für das Ist-Drehmoment, eine Steuer- und Abschalteinrichtung zum Steuern des Anziehens mit konstanter, hoher Drehzahl bis zum Erreichen eines vorgegebenen Schraubdrehmoments und ab dann zum stetigen Herabsetzen der Drehzahl der Antriebseinheit bei kleiner werdenden Differenz zwischen dem der geforderten Soll-Vorspannkraft entsprechenden Soll-Drehmoment und dem Ist-Drehmoment und zum Abschalten der Antriebseinheit bei Übereinstimmung des Ist-Drehmoments mit dem der geforderten Soll-Vorspannkraft entsprechenden Soll-Drehmoment aufweist, wobei die Eingabeelektronik zum Eingeben des vorgebbaren Schraubendrehmoments, das kleiner als das Soll-Drehmoment zum Spannen einer gegebenen Schraube ist, eingerichtet ist und von dem ab die Drehzahl der Antriebseinheit herabgesetzt wird.

Der Schraubvorgang wird somit zunächst mit hoher Drehzahl durchgeführt und erst nach Erreichen eines vorgegebenen Schraubmoments setzt das Herabsetzen der Drehzahl ein. Hierdurch ergibt sich eine Verkürzung des Schraubvorgangs.

Besonders vorteilhaft ist die Verwendung der erfindungsgemäßen Drehzahlregelung in Verbindung mit einer Eingabeelektronik, die zum Eingeben der Schraubengröße, der Gewindesteigung und der Materialgüte eingerichtet ist, woraus eine Auswerteelektronik das der Soll-Vorspannkraft entsprechende Soll-Drehmoment ermittelt.

Die Steuer- und Abschalteinrichtung zum Steuern der Drehzahl der Antriebseinheit bewirkt, dass die Rotationsenergie des Kraftschraubers bei Annäherung an die Soll-Werte immer geringer wird und daher diese Rotationsenergie im Moment des Abschaltens gleich oder annähernd gleich Null ist und sich nicht auf die Ist-Vorspannkraft auswirken kann.

Diese Steuerung der Drehzahl lässt sich bei jedem Kraftschrauber mit elektronischer Drehmomentbegrenzung aber auch bei einem Kraftschrauber bei dem die Steuer- und Abschalteinrichtung eine elektronische Schraubenspannwinkelbegrenzung aufweist, einsetzen.

Vorteilhaft kann es auch sein, an einem Kraftschrauber der vorerwähnten Art die Abtasteinrichtung für das Ist-Drehmoment so einzurichten, dass sie das Ist-Drehmoment einer bereits eingeschraubten Schraube durch geringfügiges Weiterdrehen misst und die Auswerteelektronik daraus ein Soll-Drehmoment und/oder einen Soll-Schraubenspannwinkel für ein weiteres Ausziehen der Schraube auf einen den eingegebenen Daten entsprechenden Wert bewirkt.

Die Bedienungsperson braucht somit nicht mehr anhand von Tabellen das Soll-Drehmoment für eine bestimmte Schraubengröße und Gewindesteigung mit einer bestimmten Materialgüte ermitteln und in die Eingabeelektronik eingeben, sondern es genügt, die Schraubengröße, die Gewindesteigung und die Materialgüte direkt in die Eingabeelektronik einzugeben, woraufhin das sich daraus ergebende Soll-Drehmoment durch die Auswerteelektronik festgelegt wird und zum Steuern des Kraftschraubers dient. Fehleinstellungen, die zu Schäden an den anzuziehenden Schrauben und am Kraftschrauber führen können, werden vermieden, da keine besonderen Fachkenntnisse der Bedienungsperson erforderlich sind.

Zur Erhöhung der Genauigkeit beim Anziehen von Schrauben kann die Eingabeelektronik zum Eingeben der Schraubengröße, der Materialgüte, der Gewindesteigung und der Klemmlänge eingerichtet sein, die Auswerteelektronik daraus eine Soll-Vorspannkraft, ein Soll-Drehmoment und einen Schraubenspannwinkel ermitteln, eine Abtasteinrichtung das Ist-Drehmoment und eine Abtasteinrichtung den Ist-Schraubenspannwinkel ermitteln und eine Steuer- und Abschalteinrichtung vorgesehen sein, die das Weiterdrehen der Antriebseinheit bei Übereinstimmung des Ist-Drehmoments mit dem Soll-Drehmoment und das Abschalten der Antriebseinheit bei Übereinstimmung des Ist-Schraubenspannwinkels mit dem Soll-Schraubenspannwinkel bewirkt.

Diese erfindungsgemäße Steuervorrichtung für den Kraftschrauber geht von der Überlegung aus, daß sich die genaueste Einstellung der Schraubenvorspannkraft aus der Überwachung der Schraubendehnung ergibt, da die Schraubendehnung aufgrund des "Hook'schen Gesetzes" in einer linearen Beziehung zur Vorspannkraft, dem Schraubenquerschnitt, der Einspannlänge und dem Elastizitätmodul steht. Diese Schraubendehnung ist aus geometrischen Gründen direkt proportional zum Schraubenspannwinkel, jedoch läßt sich der Nullwert der Dehnung aus der Schraubendrehung nicht direkt ermitteln, da die Schraube zunächst mit geringem Drehmoment bis zur festen Anlage der zu spannenden Teile, dem Fügepunkt, gedreht wird und erst dann der lineare Anstieg der Vorspannkraft mit der Schraubendehnung einsetzt. Rechnerisch lassen sich indessen die Soll-Vorspannkraft aus der eingegebenen Schraubengröße, der Materialgüte und der Klemmlänge ermitteln und daraus in Verbindung mit der eingegebenen Gewindesteigung das Soll-Drehmoment und der resultierende Schraubenspannwinkel ermitteln. Es genügt daher, zunächst das Ist-Drehmoment bis zu einer vorgebbaren Höhe zu messen und die Steuer- und Abschalteinrichtung so auf den Kraftschrauber einwirken zu lassen, daß von diesem Punkt an das Weiterdrehen der Antriebseinheit um einen bestimmten Winkel, der zu der gewünschten Soll-Vorspannkraft führt, erfolgt.

Hierdurch wird die Bedienung stark vereinfacht und werden Bedienungsfehler vermieden, da alle Daten in die Eingabeelektronik eingegeben werden und die Auswerteelektronik daraus selbsttätig die Steuerdaten ermittelt.

Vorzugsweise kann das Soll-Drehmoment, von dem ab das Weiterdrehen der Antriebseinheit bis Erreichen des Soll-Schraubenspannwinkels gesteuert wird, auf einen Wert, der kleiner als das der Soll-Vorspannkraft entsprechende Drehmoment ist, eingestellt sein und wird der Weiterdrehwinkel der Antriebseinheit bis Erreichen des der Soll-Vorspannkraft entsprechenden Soll-Schraubenspannwinkel aus der Differenz zwischen dem Soll-Schraubenspannwinkel und dem dem eingestellten Soll-Drehmoment entsprechenden Schraubenspannwinkel ermittelt und dient zum Abschalten der Antriebseinheit.

Besonders bevorzugt ist, daß das Soll-Drehmoment auf 10 % bis 20 % des der Soll-Vorspannkraft entsprechenden Drehmoments eingestellt wird und sich der Weiterdrehwinkel auf 90 % bis 80 % des der Soll-Vorspannkraft entsprechenden Soll-Schraubenspannwinkel beläuft.

Die Erfahrung hat gezeigt, daß nach Erreichen von 10 % bis 20 % des der Soll-Vorspannkraft entsprechenden Drehmoments der lineare Bereich der Schraubendehnung erreicht ist, so daß der Weiterdrehwinkel auf 90 % bis 80 % des der Soll-Vorspannkraft entsprechenden Soll-Schraubenspannwinkel eingestellt werden kann und zu einem sehr genauen Spannen der Schrauben mit der gewollten Vorspannkraft führt, da die Ungenauigkeiten während der Anfangsphase des Spannens der Schraube nur geringfügig in die Endvorspannkraft eingehen.

Im Hinblick auf die Platzverhältnisse im Gehäuse des Kraftschraubers ist es vorteilhaft, wenn wenigstens die Steuer- und Abschalteinrichtung ggf. auch die Auswerteelektronik in die Antriebseinheit integriert sind, während die Eingabeelektronik und ggf. die Auswerteelektronik als unabhängiges Steuergerät ausgebildet sind und auf die Steuer- und Abschalteinrichtung oder auf die Auswerteelektronik kabelfrei mit bidirektionaler oder unidirektionaler Übertragung der Daten wirken. Zu diesem Zweck kann die Fernübertragung als uni- oder bidirektionale Infrarotstrecke gestaltet sein und ein entsprechender Infrarotsignalempfänger an der Antriebseinheit angeordnet sein.

Insbesondere wenn die Steuer- und Abschalteinrichtung in die Antriebseinheit integriert ist, während die Eingabeelektronik und die Auswerteelektronik als unabhängiges Steuergerät ausgebildet sind, können diese in einem tragbaren Rechner zusammengefaßt sein, der eine bidirektionale IrDA-Schnittstelle mit Infrarotübertragung aufweist, während eine entsprechende Schnittstelle an der Antriebseinheit angeordnet ist.

Unidirektionale Infrarotdatenübertragungseinrichtungen sind als Infrarotfernbedienung für Fernsehgeräte bekannt. Sie ermöglichen eine unidirektionale Datenübertragung über Entfernungen bis zu 36 m unter optimalen Bedingungen. Bei diesen unidirektionalen Infrarotdatenübertragungssystemen ist der Ruhestrom des Senders fast gleich Null, während der Strom während des Sendens nur einige Milliampere beträgt. Der Empfänger hat ebenfalls nur eine Stromaufnahme von einigen Milliampere, d. h. in einem Bereich, der für die bei den tragbaren Kraftschraubern üblichen Stromversorgungen zulässig ist.

Tragbare Rechner sind häufig bereits mit einer IrDA-Schnittstelle ausgestattet. Hierbei handelt es sich um eine standardisierte, bidirektionale Schnittstelle mit Infrarotübertragung. Eine entsprechende Schnittstelle ist am Kraftschrauber angeordnet und diese IrDA-Baugruppen weisen einen geringen Stromverbrauch von einigen Mikroampere im Ruhezustand und einigen Milliampere im aktiven Zustand auf.

Vorteilhaft sind bei allen Infrarotübertragungssystemen die prinzipbedingte optimale galvanische Trennung sowie die geringen Kosten der Standardbauteile. Auch ergeben sich keinerlei Beeinträchtigungen durch die Abstrahlung von Störsignalen oder durch Beeinflussung durch Störsignale. Bei Verwendung von standardisierten IrDA-Baugruppen lassen sich zur Sicherung der übertragenen Daten Prüfbits mitsenden. Des weiteren ist ein tragbarer Rechner, der mit dem Kraftschrauber nur über die bidirektionale Infrarot-Schnittstelle verbunden ist, geeignet, große Datenmengen zu verarbeiten und somit eine große Anzahl von Schraubvorgängen statistisch auszuwerten und zu dokumentieren.

Wenn die Eingabeelektronik ein Display aufweist, läßt sie sich so einrichten, daß auf dem Display die eingegebenen Werte, die daraus ermittelten Soll-Werte, und/oder der aktuelle Ist-Drehmomentlauf und/oder der aktuelle Ist-Schraubendrehwinkelverlauf dargestellt werden.

Die Erfindung wird nachstehend anhand eines in der Zeichnung dargestellten Ausführungsbeispiels des näheren erläutert. In der Zeichnung zeigen:
- Fig. 1: eine schematische Darstellung eines Kraftschraubers und der elektronischen Steuerelemente und
- Fig. 2: eine graphische Darstellung des Verlaufs des Drehmoments M, der Vorspannkraft F und der Drehzahl n in Abhängigkeit vom Schraubenspannwinkel.

Ein allgemein mit der Bezugsziffer 1 bezeichneter Kraftschrauber weist eine Antriebseinheit 2 auf, die hier als elektrische Antriebseinheit dargestellt ist, die jedoch auch pneumatisch oder hydraulisch betrieben sein kann. An die Antriebseinheit 2 ist ein Planetengetriebe 3 angesetzt, das wie dargestellt, einen Winkeltrieb aufweisen kann, das sich jedoch auch koaxial zur Hauptdrehachse der Antriebseinheit erstrecken kann. Das Planetengetriebe 3 dient zum Herabsetzen der Drehzahl der Antriebseinheit 2 und zum Erhöhen des erzielbaren Drehmoments.

An einem Hals des Planetengetriebes 3 im Bereich einer als Vierkant 5 ausgebildeten Ausgangswelle des Planetengetriebes 3 ist ein Stützfuß 4 drehfest angeordnet, der sich beim Anziehen einer Schraube gegen eine feste Abstützung bewegt und auf diese Weise das Reaktionsmoment aufnimmt. Der Vierkant 5 dient zum Aufstecken einer Schlüsselnuß.

Zu der Antriebseinheit 2 gehört eine Eingabeelektronik 6, die eine Tastatur 7 und ggf. ein Display 8 zur Anzeige der Eingaben, aufweist. In diese Eingabeelektronik 6 lassen sich die Schraubengröße, die Materialgüte, die Gewindesteigung, die Klemmlänge eingeben und ebenfalls auf dem Display 8 anzeigen. Diese Werte werden an eine Auswerteelektronik 9 weitergeleitet, die aus der eingegebenen Schraubengröße und der Materialgüte ein Soll-Drehmoment oder aus der Schraubengröße, der Materialgüte und der Klemmlänge eine Soll-Vorspannkraft und daraus unter Einbeziehung der Gewindesteigung ein resultierendes Soll-Drehmoment und schließlich aus der Soll-Vorspannkraft und der Gewindesteigung einen resultierenden Schraubenspannwinkel ermittelt. Diese ermittelten Soll-Werte und/oder der aktuelle Ist-Drehmomentverlauf und/oder der aktuelle Ist-Schraubendrehwinkelverlauf lassen sich ebenfalls auf dem Display 8 anzeigen.

Mit dem Planetengetriebe 3 wirken eine Abtasteinrichtung 10 für das Ist-Drehmoment und eine Abtasteinrichtung 11 für den Ist-Schraubenspannwinkel zusammen. Bei diesen Abtasteinrichtungen 10, 11 kann es sich um übliche, berührungslose Abtasteinrichtungen, wie sie z. B. in der deutschen Patentschrift 43 07 131 beschrieben sind, handeln. Die Meßwerte der Abtasteinrichtung 10, 11 werden an eine Steuer- und Abschalteinrichtung 12 geleitet, die auf die Antriebseinheit 2 wirkt.

Vorzugsweise sind die Abtasteinrichtungen 10, 11 und die Steuer- und Abschalteinrichtung 12 und ggf. die Auswerteelektronik 9 in die Antriebseinheit 2 integriert, während die Eingabeelektronik 6 und ggf. die Auswerteelektronik 9 von dem Kraftschrauber 1 unabhängig als Steuergerät ausgebildet sein und mit dem Kraftschrauber 1 über ein Kabel verbunden sein kann, oder besonders bevorzugt kabelfrei mit Fernübertragung der Daten auf die in den Kraftschrauber 1 integrierte Elektronik wirkt. Wenn hierzu eine Infrarotfernübertragung verwendet wird, lassen sich die in die Eingabeelektronik 6 eingegebenen Daten oder die in der Auswerteelektronik 9 umgewandelten Steuerdaten kabelfrei zum Kraftschrauber 1 übertragen. Wenn die Eingabeelektronik 6 und die Auswerteelektronik 9 zu einem tragbaren Rechner zusammengefaßt sind und dieser mit einer sog. IrDA-Schnittstelle 13 als Fernübertragung ausgestattet ist, können die Infrarotsignale von dieser Schnittstelle auf eine entsprechende Schnittstelle 14 am Kraftschrauber 1, die mit der Steuer- und Abschalteinrichtung 12 in Verbindung steht, übertragen werden. Diese IrDA-Schnittstelle 13 und die entsprechende Schnittstelle 14 sind als standardisierte bidirektionale Schnittstellen mit Infrarotübertragung für Entfernungen bis zu einem Meter und Übertragungsraten von mehr als 1MBit/S ausgelegt. Diese IrDA-Baugruppen 13, 14 haben im Ruhezustand einen geringen Stromverbrauch von einigen Mikroampere und im aktiven Zustand einen solchen von einigen Milliampere, der in einem Bereich liegt, der für die bei tragbaren Kraftschraubern üblichen Stromversorgungen zulässig ist. Besonders vorteilhaft ist bei diesem Infrarotübertragungssystem die prinzipbedingte, optimale galvanische Trennung der Eingabeelektronik 6 und der Auswerteelektronik 9 vom Kraftschrauber 1 und die geringen Kosten durch die Verwendung von Standardbauteilen. Diese Standardbauteile weisen so geringe Abmessungen auf, daß sie sich problemlos in das Gehäuse des Kraftschraubers 1 integrieren lassen.

Wenn nur die Eingabeelektronik 6 unabhängig vom Kraftschrauber 1 ausgebildet ist, ist eine bidirektionale Datenübertragung nicht erforderlich, so daß in diesem Fall auch die Möglichkeit besteht, die für Fernsehgeräte bekannten Infrarotfernbedienungen für eine unidirektionale Fernübertragung der Daten zu verwenden. Auch diese Infrarotfernbedienungen weisen einen sehr geringen Ruhestrom auf, während im aktiven Zustand der Stromverbrauch bei einigen Milliampere liegt.

Soll der erfindungsgemäße Kraftschrauber 1 nur mit einer Drehmomentbegrenzung arbeiten, braucht nur die Schraubengröße und die Materialgüte in die Eingabeelektronik 6 eingegeben zu werden, so daß die Auswerteelektronik 9 das entsprechende Soll-Drehmoment ermittelt. Während des Anziehens der Schraube mißt die Abtasteinrichtung 10 das Ist-Drehmoment, und die Steuer- und Abschalteinrichtung 12 schaltet die Antriebseinheit 2 bei Übereinstimmung des Ist-Drehmoments mit dem Soll-Drehmoment ab.

Wird ein hochgenaues Anziehen der Schraube auf eine Soll-Vorspannkraft gefordert, die sich aus der Schraubengröße, der Materialgüte und der Klemmlänge ermitteln läßt, zu der die Schraubendehnung proportional ist, werden in die Eingabeelektronik 6 die Schraubengröße, die Materialgüte, die Gewindesteigung und die Klemmlänge eingegeben, woraus die Auswerteelektronik 9 eine Soll-Vorspannkraft, ein Soll-Drehmoment und einen Soll-Schraubenspannwinkel ermittelt.

Beim Spannen der Schraube werden mittels der Abtasteinrichtung 10 das Ist-Drehmoment und mittels der Abtasteinrichtung 11 der Ist-Schraubenspannwinkel ermittelt und der Steuer- und Abschalteinrichtung 12 zugeleitet. Die Steuer- und Abschalteinrichtung 12 ist so eingerichtet, daß sie das Weiterdrehen der Antriebseinheit um einen bestimmten Winkel bei Übereinstimmung des Ist-Drehmoments mit dem Soll-Drehmoment bewirkt und die Antriebseinheit 2 abschaltet, wenn der Ist-Schraubenspannwinkel mit dem Soll-Spannwinkel übereinstimmt. Dieses Soll-Drehmoment, von dem ab das Weiterdrehen der Antriebseinheit 2 bis Erreichen des Soll-Schraubenspannwinkels gesteuert wird, ist kleiner als das der Soll-Vorspannkraft entsprechende Drehmoment, vorzugsweise entspricht es 10 % bis 20 % des der Soll-Vorspannkraft entsprechenden Drehmoments, während sich der Weiterdrehwinkel dann auf 90 % bis 80 % des der Soll-Vorspannkraft entsprechenden Soll-Schraubenspannwinkels beläuft.

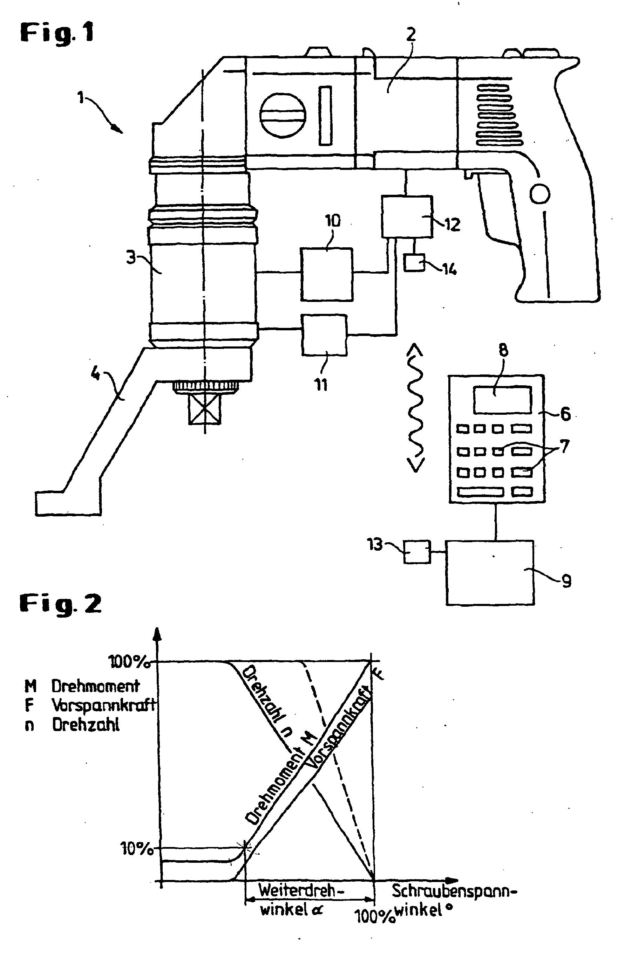

Aus Fig. 2 ist erkennbar, daß das Drehmoment M beim Drehen der Schraube bis zum Erreichen des Fügepunktes zunächst auf einem niedrigen Wert verharrt und erst nach Überschreiten von 10 % bis 20 % des der Soll-Vorspannkraft entsprechenden Drehmoments linear mit dem Schraubenspannwinkel ansteigt. Dementsprechend liegt der Ausgangspunkt für den Weiterdrehwinkel α bei 10 % bis 20 % des der Soll-Vorspannkraft entsprechenden Drehmoments und dieser Weiterdrehwinkel α beträgt entsprechend 20 % bis 80 % des der Soll-Vorspannkraft entsprechenden Soll-Schraubenspannwinkels, der sich sehr genau überwachen läßt.

Die Drehzahl n der Antriebseinheit 2 läßt sich erfindungsgemäß so steuern, daß sie sich mit kleiner werdender Differenz zwischen dem Soll-Drehmoment und dem Ist-Drehmoment oder zwischen dem Soll-Schraubenspannwinkel und dem Ist-Schraubenspannwinkel stetig vermindert und bei Erreichen des Soll-Drehmoments oder des Soll-Schraubenspannwinkels auf Null geht, d. h. daß die Antriebseinheit abgeschaltet wird. Diese Herabsetzung der Drehzahl der Antriebseinheit 2 kann, wie dargestellt, linear erfolgen, jedoch ist auch ein nicht linearer Verlauf einstellbar. Insbesondere ist es möglich, den Schraubvorgang zunächst mit hoher Drehzahl durchzuführen und erst nach Erreichen eines vorgebbaren Schraubmoments die Drehzahl herabzusetzen. Hierdurch ergibt sich eine Verkürzung des Schraubvorgangs. Diese Drehzahlsteuerung ist in Fig. 2 gestrichelt dargestellt.

Mit dem erfindungsgemäßen Kraftschrauber wird die Bedienung unter Ausschaltung von Fehlerquellen erheblich erleichtert, die Schraubenvorspannkraft läßt sich erheblich genauer erreichen und die Begrenzung der Rotationsenergie der Antriebseinheit in Abhängigkeit vom schon abgeforderten Moment des Schraubenfalls wird begrenzt, so daß sich eine Getriebe- und Materialschonung sowie eine weitgehende Unabhängigkeit des Abschältmoments vom zeitlichen Momentverlauf des Schraubenfalls ergeben.

Des weiteren ist es auch möglich, an dem erfindungsgemäßen Kraftschrauber 1 die Abtasteinrichtung 10 für das Ist-Drehmoment so einzurichten, daß sie das Ist-Drehmoment einer bereits fest angezogenen Schraube durch geringfügiges Weiterdrehen mißt und die Auswerteelektronik 9 daraus ein Soll-Drehmoment und/oder einen Soll-Schraubenspannwinkel für ein weiteres Anziehen der Schraube auf einen den eingegebenen Daten entsprechenden Wert bewirkt.

## Patentansprüche

1. Kraftschrauber mit
- einer Antriebseinheit (2),
- einer Eingabeelektronik (6) zum Eingeben eines der geforderten Soll-Vorspannkraft entsprechenden Soll-Drehmoments,
- einer Abtasteinrichtung (10, 11) für das Ist-Drehmoment,
- einer Steuer- und Abschalteinrichtung (12) zum Steuern des Anziehens mit konstanter hoher Drehzahl bis zum Erreichen eines vorgegebenen Schraubendrehmoments und ab dann zum stetigen Herabsetzen der Drehzahl der Antriebseinheit (2) bei kleiner werdender Differenz zwischen dem der geforderten Soll-Vorspannkraft entsprechendem Soll-Drehmoment und dem Ist-Drehmoment und zum Abschalten der Antriebseinheit (2) bei Übereinstimmung des Ist-Drehmoments mit dem der geforderten Soll-Vorspannkraft entsprechenden Soll-Drehmoment, wobei
- die Eingabeelektronik (6) zum Eingeben des vorgebbaren Schraubendrehmoments, das kleiner als das Soll-Drehmoment zum Spannen einer gegebenen Schraube, aber merklich größer als das Fügemoment am Beginn des linearen Bereichs der Schraubendrehung ist, eingerichtet ist und von dem ab die Drehzahl der Antriebseinheit (2) herabgesetzt wird.

2. Kraftschauber nach Anspruch 1, bei dem
- die Eingabeelektronik (6) zum Eingeben der Schraubengröße, der Gewindesteigung und der Materialgüte eingerichtet ist, woraus
- eine Auswerteelektronik (9) das der Sollvorspannkraft entsprechende Soll-Drehmoment ermittelt.

3. Kraftschrauber nach einem der Ansprüche 1 und/oder 2, bei dem
- die Abtastvorrichtung (10, 11) das Ist-Drehmoment einer bereits eingeschraubten Schraube durch geringfügiges Weiterdrehen misst und die Auswerteelektronik (9) daraus einen Soll-Schraubenspannwinkel für ein weiteres Anziehen der Schraube auf einen den eingegebenen Daten entsprechenden Wert bewirkt.

4. Kraftschrauber (1) nach einem der Ansprüche 1 bis 3 mit
- einer Abtasteinrichtung (11) für den Ist-Schraubenspannwinkel und
- einer Steuer- und Abschalteinrichtung (12) zum Steuern des Weiterdrehens der Antriebseinheit (2) bei Übereinstimmung des Ist-Drehmoments mit einem Soll-Drehmoment und zum Abschalten der Antriebseinheit (2) bei Übereinstimmung des Ist-Schraubenspannwinkeis mit dem Soll-Schraubenspannwinkel, wobei das Soll-Drehmoment, von dem ab das Weiterdrehen der Antriebseinheit (2) bis Erreichen des Soll-Schraubenspannwinkels gesteuert wird, auf einen Wert, der kleiner als das der Soll-Vorspannkraft entsprechende Drehmoment ist, eingestellt wird und ein Weiterdrehwinkel der Antriebseinheit (2) bis Erreichen des der Soll-Vorspannkraft entsprechenden Soll-Schraubenspannwinkels zum Abschalten der Antriebseinheit (2) dient, wobei
- die Eingabeelektronik (6) zum Eingeben der Schraubengröße, der Materialgüte, der Gewindesteigung und der Klemmlänge eingerichtet ist,
- eine Auswerteelektronik (a) vorgesehen ist, die zum Ermitteln der Soll-Vorspannkraft aus der eingegebenen Schraubengröße, der Materialgüte und der Klemmlänge, zum Ermitteln des aus der Soll- Vorspannkraft und der Gewindesteigung resultierenden Soll-Drehmoments und zum Ermitteln des aus der Soll-Vorspannkraft und der Gewindesteigung resultierenden Soll-Schraubenspannwinkels eingerichtet, und
- der Weiterdrehwinkel der Antriebseinheit aus der Differenz zwischen dem Soll-Schraubenspannwinkel und dem eingestellten Soll-Drehmoment entsprechenden Schraubenspannwinkel ermittelt wird.

5. Kraftschrauber nach einem der Ansprüche 1 bis 4, bei dem die Auswerteelektronik (9) und die Steuer und Abschalteinrichtung (12) in die Antriebseinheit (2) integriert sind, während die Eingabeelektronik (6) als unabhängiges Steuergerät ausgebildet ist und auf die Auswerteelektronik (9) kabelfrei mit unidirektionaler Fernübertragung (13) der Daten wirkt.

6. Kraftschrauber nach Anspruch 5, bei dem die Fernübertragung (13) als unidirektionale Infrarotstrecke gestaltet ist und ein Infrarotsignalempfänger (14) an der Antriebseinheit (2) angeordnet ist.

7. Kraftschrauber nach Anspruch 6, bei dem die Eingabeelektronik (6) und die Auswerteelektronik (9) in einen tragbaren Rechner mit bidirektionaler IrDA-Schnittstelle (13) mit Infrarotübertragung integriert sind und eine entsprechende Schnittstelle (14) an der Antriebseinheit (2) angeordnet ist.

8. Kraftschrauber nach einem oder mehreren der Ansprüche 1 bis 7, bei dem die Eingabeelektronik (6) ein Display (8) aufweist und zur Anzeige der eingegebenen Werte, der daraus ermittelten Werte und/oder des aktuellen Ist-Drehmomentverlaufs und/oder des aktuellen Ist-Drehwinkelverlaufs auf dem Display (8) eingerichtet ist.

## Claims

1. Power screwdriver comprising
- a drive unit (2),
- input electronics (6) for inputting a nominal torque corresponding to the required nominal preload force,
- a sensing device (10, 11) for the actual torque,
- a control and shutoff device (12) for controlling the tightening at a constant high rotational speed until a predefined screw torque is achieved, and then for continuously reducing the rotational speed of the drive unit (2) as the difference between the nominal torque corresponding to the required nominal preload force and the actual torque becomes less and for shutting off the drive unit (2) when the actual torque is equal to the nominal torque corresponding to the nominal preload force, wherein
- the input electronics (6) are designed for inputting the predefinable screw torque, which is lower than the nominal torque for tightening a given screw but is markedly greater than the joining moment at the start of the linear range of the screw turning operation, and from that point onwards the rotational speed of the drive unit (2) is reduced.

2. Power screwdriver according to claim 1, in which
- the input electronics (6) are designed for inputting the screw size, the thread pitch and the material quality, as a result of which
- evaluation electronics (9) determine the nominal torque corresponding to the nominal preload force.

3. Power screwdriver according to one of claims 1 and/or 2, in which
- the sensing device (10, 11) measures the actual torque of a screw that has already been screwed in by turning it slightly further, and the evaluation electronics (9) determine therefrom a nominal screw tightening angle for a further tightening of the screw to a value corresponding to the input data.

4. Power screwdriver (1) according to one of claims 1 to 3, comprising
- a sensing device (11) for the actual screw tightening angle, and
- a control and shutoff device (12) for controlling the further turning of the drive unit (1) when the actual torque is equal to a nominal torque and for shutting off the drive unit (2) when the actual screw tightening angle is equal to the nominal screw tightening angle, wherein the nominal torque, from which point onwards the further turning of the drive unit (2) is controlled until the nominal screw tightening angle is achieved, is set to a value which is lower than the torque corresponding to the nominal preload force, and a further turning angle of the drive unit (2) serves for shutting off the drive unit (2) once the nominal screw tightening angle corresponding to the nominal preload force is reached, wherein
- the input electronics (6) are designed for inputting the screw size, the material quality, the thread pitch and the clamping length,
- evaluation electronics (a) are provided which are designed to determine the nominal preload force from the input screw size, the material quality and the clamping length, to determine the nominal torque resulting from the nominal preload force and the thread pitch, and to determine the nominal screw tightening angle resulting from the nominal preload force and the thread pitch, and
- the further turning angle of the drive unit is determined from the difference between the nominal screw tightening angle and the screw tightening angle corresponding to the set nominal torque.

5. Power screwdriver according to one of claims 1 to 4, in which the evaluation electronics (9) and the control and shutoff device (12) are integrated in the drive unit (2), while the input electronics (6) are designed as an independent control unit and act on the evaluation electronics (9) in a wireless manner with unidirectional remote transmission (13) of the data.

6. Power screwdriver according to claim 5, in which the remote transmission (13) is embodied as a unidirectional infrared pathway and an infrared signal receiver (14) is arranged on the drive unit (2).

7. Power screwdriver according to claim 6, in which the input electronics (6) and the evaluation electronics (9) are integrated in a portable computer with a bidirectional IrDA interface (13) with infrared transmission, and a corresponding interface (14) is arranged on the drive unit (2).

8. Power screwdriver according to one or more of claims 1 to 7, in which the input electronics (6) comprise a display (8) and are designed to display the input values, the values determined therefrom and/or the course of the current actual torque and/or the course of the current actual rotation angle on the display (8).

## Revendications

1. Visseuse à moteur comportant
- une unité d'entraînement (2),
- une électronique d'entrée (6) pour entrer un couple de rotation théorique correspondant à la force de précontrainte théorique exigée,
- un dispositif d'exploration (10, 11) pour le couple de rotation réel,
- un dispositif de commande et de déconnexion (12) destiné à commander le serrage avec une vitesse de rotation élevée constante jusqu'à atteindre un couple de rotation prédéfini de la vis et, à partir de là, pour diminuer en continu la vitesse de rotation de l'unité d'entraînement (2) lorsque la différence entre le couple de rotation théorique, correspondant à la force de précontrainte théorique exigée, et le couple de rotation réel est devenue plus petite et pour arrêter l'unité d'entraînement (2) lorsque le couple de rotation réel coïncide avec le couple de rotation théorique, correspondant à la force de précontrainte théorique exigée, dans laquelle visseuse
- l'électronique d'entrée (6) est configurée pour entrer le couple de rotation prédéfinissable de la vis, qui est inférieur au couple de rotation théorique pour serrer une vis donnée, mais nettement supérieur au moment d'adaptation au début de la zone linéaire de la rotation de la vis et à partir duquel la vitesse de rotation de l'unité d'entraînement (2) est diminuée ;

2. Visseuse à moteur selon la revendication 1, dans laquelle l'électronique d'entrée (6) est conçue pour entrer la dimension de la vis, le pas du filetage et le type de matériau, à partir desquels une électronique d'analyse (9) calcule le couple de rotation théorique, correspondant à la force de précontrainte théorique.

3. Visseuse à moteur selon les revendications 1 et/ou 2, dans laquelle le dispositif d'exploration (10, 11) mesure, sous l'effet d'une légère poursuite de la rotation, le couple de rotation réel d'une vis déjà introduite, et l'électronique d'analyse (9) en déduit un angle de serrage théorique de la vis pour poursuivre le serrage de la vis selon une valeur correspondant aux données entrées.

4. Visseuse à moteur (1) selon l'une quelconque des revendications 1 à 3, comportant
- un dispositif d'exploration (11) pour l'angle de serrage réel de la vis,
- un dispositif de commande et de déconnexion (12) destiné à commander la poursuite de la rotation de l'unité d'entraînement (2) lorsque le couple de rotation réel coïncide avec un couple de rotation théorique, et pour arrêter l'unité d'entraînement (2) lorsque l'angle de serrage réel de la vis coïncide avec l'angle de serrage théorique de la vis, sachant que le couple de rotation théorique, à partir duquel la poursuite de la rotation de l'unité d'entraînement (2) est commandée jusqu'à ce que l'angle de serrage théorique de la vis soit atteint, est réglé à une valeur qui est inférieure au couple de rotation correspondant à la force de précontrainte théorique, et la poursuite de la rotation de l'unité d'entraînement (2) jusqu'à ce que l'angle de serrage théorique, correspondant à la force de précontrainte théorique, soit atteinte est destinée à arrêter l'unité d'entraînement (2), dans laquelle
- l'électronique d'entrée (6) est conçue pour entrer la dimension de la vis, le type de matériau, le pas du filetage et la longueur de serrage,
- une électronique d'analyse (a) est prévue, laquelle est conçue pour calculer la force de précontrainte théorique à partir de la dimension de la vis, du type de matériau et de la longueur de serrage, pour calculer le couple de rotation théorique résultant de la force de précontrainte théorique et du pas du filetage, et pour calculer l'angle de serrage théorique de la vis résultant de la force de précontrainte théorique et du pas du filetage, et
- l'angle de la poursuite de rotation de l'unité d'entraînement est calculé à partir de la différence entre l'angle de serrage théorique de la vis et l'angle de serrage de la vis correspondant au couple de rotation théorique réglé.

5. Visseuse à moteur selon l'une quelconque des revendications 1 à 4, dans laquelle l'électronique d'analyse (9) et le dispositif de commande et de déconnexion (12) sont intégrés dans l'unité d'entraînement (2), alors que l'électronique d'entrée (6) est réalisée sous la forme d'un dispositif de commande indépendant et agit sur l'électronique d'analyse (9) sans câble, avec une transmission à distance (13) unidirectionnelle des données.

6. Visseuse à moteur selon la revendication 5, dans laquelle la transmission à distance (13) est réalisée sous la forme d'une voie unidirectionnelle par infrarouge et un récepteur de signaux infrarouges (14) est disposé sur l'unité d'entraînement (2).

7. Visseuse à moteur selon la revendication 6, dans laquelle l'électronique d'entrée (6) et l'électronique d'analyse (9) sont intégrées dans un ordinateur portable avec une interface IrDA (13) bidirectionnelle avec transmission par infrarouge, et une interface (14) correspondante est agencée sur l'unité d'entraînement (2).

8. Visseuse à moteur selon l'une ou plusieurs des revendications 1 à 7, dans laquelle l'électronique d'entrée (6) comporte un écran (8) et est conçue pour afficher sur l'écran (8) les valeurs entrées, les valeurs calculées à partir de ces dernières et/ou la courbe du couple de rotation réel actuel et/ou la courbe de l'angle de rotation réel actuel.
